# EUROPEAN PATENT APPLICATION

(11) **EP 4 684 621 A1**
(43) Date of publication of application: **28.01.2026**
(21) Application number: 25176543.4
(22) Date of filing: 15.05.2025
(51) Int. Cl.: A01B 69/04

(54) **ROUTE PLANNING FOR AN AGRICULTURAL VEHICLE**

(30) Priority: 26.07.2024 GB 202411011
(71) Applicant: AGCO International GmbH, 8212 Neuhausen am Rheinfall (CH)
(72) Inventor: ZHOU, Kun, 8930 Randers (DK); NILSSON, Rene, DK8900 Randers (DK); LAUSDAHL, Kenneth, DK8900 Randers (DK); BECH, Søren, DK8900 Randers (DK); LUND, Jens, DK8900 Randers (DK); Lyng, Ran Sun, Randers (DK)
(74) Representative: AGCO Intellectual Property Department

(57) **Abstract**

A mechanism for generating a recommended route for an agricultural vehicle in advance of performing an agricultural process. The mechanism further includes tracking adherence of the agricultural vehicle to the recommended route and/or controlling the vehicle to follow the recommended route. The recommended route is generated responsive to the classification(s) of one or more segments of a boundary of a predetermined region in which the agricultural process is to be performed.

## Description

### FIELD

Embodiments of the present disclosure relate to agricultural vehicles, and in particular to route planning for agricultural vehicles.

### BACKGROUND

With ever-increasing population numbers and ongoing interest in more environmentally friendly farming practices, there is a desire to improve the efficiency of performing agricultural processes. Examples of agricultural processes include ploughing, planting, spraying, fertilizing, harvesting and so on. Each of these activities plays a distinct role in the overall agricultural production cycle and their efficiency directly impacts the productivity and sustainability of farming operations.

One of the identified areas for improving agricultural efficiency is the route or path taken by an agricultural vehicle during the performance of these processes. Several factors are considered when planning a route for an agricultural vehicle, such as minimizing fuel consumption, decreasing soil compression, and expanding the area available for crop cultivation, e.g., by reducing the number of vehicle tracks in the treated region.

Typically, route planning techniques make use of a known boundary of a region to undergo the agricultural process (e.g., a field). The objective of the generated route is to define a path by which the vehicle can perform the agricultural process over the entirety of this region in the most efficient manner possible, e.g., taking the above considerations into account.

There is an ongoing demand to improve the planning and tracking of recommended routes for agricultural vehicles.

### BRIEF SUMMARY

According to examples in accordance with this disclosure, there is provided A computer-implemented method for generating a recommended route for an agricultural vehicle to perform an agricultural process within a predetermined region bound by a boundary.

The computer-implemented method comprises: obtaining, by a guidance control system, boundary information, wherein the boundary information identifies a classification for each of plurality of segments of the boundary; generating, by the guidance control system, a recommended route for movement of the agricultural vehicle within the predetermined region by processing at least the boundary information; and during a subsequent performance of the agricultural process by the agricultural vehicle within the region: monitoring, using a position monitoring device, the position of the agricultural vehicle with respect to the recommended route; and responsive to a deviation of the monitored position of the agricultural vehicle from the recommended route, updating, by the guidance control system, the recommended route.

The present disclosure thereby provides a mechanism for determining a recommended route for an agricultural vehicle in advance of performing an agricultural procedure or process (e.g., a spraying procedure, ploughing procedure, planting procedure and so on). The recommended route is generated based on the classification of segments of a boundary bordering or enclosing a predetermined region. This approach recognizes that different parts or segments of a boundary can affect the ability of an agricultural vehicle to perform the agricultural process at/near said segment, the effect of the agricultural process at/near said segment and/or an effect on the agricultural vehicle moving or being located at/near said segment. In other words, the classification of a segment near an agricultural vehicle influences the effect of performing an agricultural procedure in the vicinity of the segment (e.g., at least whether or not performing the agricultural process in the vicinity of said segment will damage the agricultural vehicle, said segment and/or a region in the vicinity of the segment).

By taking classifications of a boundary of the predetermined region into account, these effects can be mitigated.

The present disclosure also proposes to track the adherence of the agricultural vehicle to the recommended route when performing the agricultural process. The route is updated responsive to a deviation of the agricultural vehicle form the recommended route, to thereby provide an adaptive approach that directly responds to a physical operation or position of the agricultural vehicle.

In some examples, the generating, by the guidance control system, the recommended route comprises: defining, for each of the plurality of segments of the boundary, a permissible proximity for the agricultural vehicle to said segment of the boundary responsive to the classification of said segment of the boundary; and generating the recommended route for movement of the agricultural vehicle by processing at least each defined permissible proximity such that, for each segment of the boundary, the recommended route avoids being more proximate to said segment of the boundary than the predefined permissible proximity for said segment.

This approach advantageously recognition that the proximity of the vehicle to different segments of the boundary has a significant effect on the consequence of performing an agricultural process in the vicinity of the segment. For instance, there is an increased risk of damage to the agricultural vehicle or segment of the boundary with increased proximity of the agricultural vehicle thereto, and this risk is at least partially dependent upon the classification of the segment. In particular, this approach recognizes that the result of this effect is dependent upon the type or classification of the relevant segment. This approach thereby improves the generation of the recommended route.

In some examples, the method further comprises obtaining, by the guidance control system, vehicle information, wherein: he vehicle information identifies a category of the agricultural vehicle; and the defining of the permissible proximity for each segment of the boundary is further responsive to the vehicle information. This approach recognizes that the effect of a classification of a segment of a boundary upon the consequence of performing an agricultural process in the vicinity thereof is at least partially dependent upon information about the agricultural vehicle. For instance, a weight, width and/or type (e.g., indicating a type of agricultural process performed) of the agricultural vehicle will have a different consequence for different types of segments.

In some examples, obtaining, by the guidance control system, boundary information comprises: obtaining initial boundary information defining the boundary that bounds the region; obtaining sensor data containing a representation of one or more objects and/or areas outside of the boundary that bounds the region; and processing the initial boundary information and the sensor data to classify each of a plurality of segments of the boundary to thereby produce the boundary information. This provides a technique for actively generating the boundary information from sensor data.

In some examples, processing the initial boundary information and the sensor data comprises: processing the sensor data to: identify and classify one or more objects or areas represented within the sensor data; and determine a relative position of each classified object or area with respect to the boundary defined by the initial boundary information; and classifying each of a plurality of segments of the boundary responsive to a proximity of each classified object or area to each segment of the boundary. This provides a mechanism that classifies each segment of the boundary responsive to a distance between the segment(s) and one or more objects or areas in the vicinity of the segment(s). In this way, the classification of the segment may effectively represent the classification of any nearby objects and/or areas.

In some examples, the sensor data is produced by a sensor device positioned within the region bound by a boundary, the sensor device having a known position with respect to the boundary; and the sensor data indicates a direction and distance between the sensor device and each classified object and/or area. This provides a reliable and effective mechanism for identifying objects and/or areas (of interest) within the vicinity of the boundary. More particularly, this approach provides a technique that facilitates generation of boundary information using a sensor device that may be mounted or carried by a vehicle (e.g., an agricultural vehicle) travelling within the predetermined region. This can be exploited to repeatedly update the boundary information with ongoing movement of one or more vehicles within the predetermined region.

In some examples, the act of processing the sensor data to identify and classify one or more objects or areas comprises processing the sensor data using one or machine-learning algorithms. This provides high quality and reliable identification and classification of one or more objects/areas within the predetermined region.

In some examples, the sensor data comprises LIDAR data produced by a LIDAR sensor.

The computer-implemented method may further comprise controlling an output user interface to provide a visual representation of the recommended route. This provides an operator of the agricultural vehicle with information on the recommended route. It will be appreciated that, if the recommended route is updated during the agricultural process, then the visual representation of the recommended route may be updated accordingly. This provides a human-machine interface that aids a human to perform a more effective agricultural process within the predetermined region.

In some examples, controlling the output user interface comprises providing a visual representation of the predetermined region; and overlaying a visual representation of the recommended route, over the visual representation of the predetermined region, in the form of one or more lines representing the recommended route. This provides an intuitive visual representation of the recommended route for increasing a likelihood of an individual adhering to the recommended route.

In some examples, the position monitoring device is configured to define a position of the agricultural vehicle within a predefined co-ordinate system; and the recommended route defines a recommended path for the agricultural vehicle within the predefined co-ordinate system. This provides a reliable system for defining and monitoring adherence to the recommended route.

The recommended route may comprise one or more location markers each identifying a point of the recommended route with respect to the predetermined co-ordinate system. This provides a reliable and resource-efficient mechanism for storing data that identifies the recommended route.

In some examples, the act of obtaining the boundary information comprises retrieving the boundary information from a database storing a plurality of instances of boundary information for different predetermined regions. Thus, it is not necessary that the guidance control system perform the generation of the boundary information, rather the boundary information may be extracted from a database. Thus, the boundary information may be predefined or precalculated, in order to improve a speed and/or efficiency of generating the recommended route.

In some examples, each classification for each of plurality of segments of the boundary indicates a type of object or area proximate to the boundary and outside of the predetermined region.

There is also provided a method for moving an agricultural vehicle within a predetermined region bound by a boundary, the method comprising: generating a recommended route for the agricultural vehicle by: obtaining, by a guidance control system, boundary information, wherein the boundary information identifies a classification for each of plurality of segments of the boundary; and generating, by the guidance control system, a recommended route for movement of the agricultural vehicle within the predetermined region by processing at least the boundary information; during a subsequent performance of the agricultural process by the agricultural vehicle within the region, controlling the travel direction of the agricultural vehicle to follow the recommended route for the agricultural vehicle.

In some examples, the act of controlling the direction of the agricultural vehicle is performed automatically. Alternatively, the act of controlling the direction of the agricultural vehicle may be performed by an operator or user of the agricultural vehicle, i.e., controlled manually.

The method may further comprise restricting or preventing the performance of an agricultural process by the agricultural vehicle until after the recommended route is available.

There is also provided an agricultural vehicle, comprising: a guidance control system configured to control one or more operations of the agricultural vehicle and comprising: at least one processor; and at least one non-transitory computer-readable storage medium storing instructions thereon that, when executed by the at least one processor, cause the guidance control system to: obtain boundary information of a predetermined region, wherein the boundary information identifies a classification for each of a plurality of segments of the boundary; generate a recommended route for movement of the agricultural vehicle within the predetermined region by processing at least the boundary information; and during a subsequent performance of the agricultural process by the agricultural vehicle within the predetermined region: monitor, using a position monitoring device, the position of the agricultural vehicle with respect to the recommended route; and responsive to a deviation of the monitored position of the agricultural vehicle from the recommended route, updating, by the guidance control system, the recommended route.

The guidance control system may be adapted to perform the acts of any herein proposed method, and vice versa.

In some examples, the agricultural vehicle further comprises an output user interface and wherein at least one non-transitory computer-readable storage medium of the guidance control system further comprises instructions that, when executed by the at least one processor, cause the guidance control system guidance control system to provide, on the output user interface, a visual representation of the recommended route.

There is also provided an agricultural vehicle comprising a guidance control system configured to control one or more operations of the agricultural vehicle and comprising: at least one processor; and at least one non-transitory computer-readable storage medium storing instructions thereon that, when executed by the at least one processor, cause the guidance control system to: obtain boundary information of a predetermined region, wherein the boundary information identifies a classification for each of a plurality of segments of the boundary; generate a recommended route for movement of the agricultural vehicle within the predetermined region by processing at least the boundary information; and during a subsequent performance of the agricultural process by the agricultural vehicle within the region, control the travel direction of the agricultural vehicle to follow the recommended route for the agricultural vehicle.

### BRIEF DESCRIPTION OF THE DRAWINGS

One or more embodiments of the disclosure will now be described, by way of example only, with reference to the accompanying drawings, in which:
FIG. 1 illustrates a view of a predetermined region with a boundary;
FIG. 2 illustrates a view of the predetermined region with segments of the boundary;
FIG. 3 is a flowchart illustrating a proposed method;
FIG. 4 illustrates a view of the predetermined region with a representation of a recommended route;
FIG. 5 illustrates an example approach for performing an act of a proposed method;
FIGS. 6, 7 and 8 illustrate example permissible proximities for different segments;
FIG. 9 illustrates an example approach for performing another act of the proposed method;
FIG. 10 is a flowchart illustrating another proposed method; and
FIG. 11 illustrates a system comprising a guidance control system as herein proposed.

### DETAILED DESCRIPTION

It should be understood that the detailed description and specific examples, while indicating exemplary embodiments of the apparatus, systems and methods, are intended for purposes of illustration only and are not intended to limit the scope of the disclosure. These and other features, aspects, and advantages of the apparatus, systems and methods of the present disclosure will become better understood from the following description, appended claims, and accompanying drawings. It should be understood that the Figures are merely schematic and are not drawn to scale. It should also be understood that the same reference numerals are used throughout the Figures to indicate the same or similar parts.

The following description provides specific details of embodiments. However, a person of ordinary skill in the art will understand that the embodiments of the disclosure may be practiced without employing many such specific details. Indeed, the embodiments of the disclosure may be practiced in conjunction with conventional techniques employed in the industry. In addition, the description provided below does not include all the elements that form a complete structure or assembly. Only those process acts and structures necessary to understand the embodiments of the disclosure are described in detail below. Additional conventional acts and structures may be used.

As used herein, the terms "comprising," "including," "containing," "characterized by," and grammatical equivalents thereof are inclusive or open-ended terms that do not exclude additional, unrecited elements or method steps, but also include the more restrictive terms "consisting of" and "consisting essentially of" and grammatical equivalents thereof.

As used herein, the singular forms following "a," "an," and "the" are intended to include the plural forms as well, unless the context clearly indicates otherwise.

As used herein, the term "may" with respect to a material, structure, feature, or method act indicates that such is contemplated for use in implementation of an embodiment of the disclosure, and such term is used in preference to the more restrictive term "is" so as to avoid any implication that other compatible materials, structures, features, and methods usable in combination therewith should or must be excluded.

As used herein, the term "configured" refers to a size, shape, material composition, and arrangement of one or more of at least one structure and at least one apparatus facilitating operation of one or more of the structure and the apparatus in a predetermined way.

As used herein, any relational term, such as "first," "second," "top," "bottom," "upper," "lower," "above," "beneath," "side," "outer," "inner," etc., is used for clarity and convenience in understanding the disclosure and accompanying drawings, and does not connote or depend on any specific preference or order, except where the context clearly indicates otherwise. For example, these terms may refer to an orientation of elements as illustrated in the drawings. Additionally, these terms may refer to an orientation of elements of the disclosure when utilized in a conventional manners.

As used herein, the term "substantially" in reference to a given parameter, property, or condition means and includes to a degree that one skilled in the art would understand that the given parameter, property, or condition is met with a small degree of variance, such as within acceptable manufacturing tolerances. By way of example, depending on the particular parameter, property, or condition that is substantially met, the parameter, property, or condition may be at least 90.0% met, at least 95.0% met, at least 99.0% met, or even at least 99.9% met.

As used herein, the term "about" used in reference to a given parameter is inclusive of the stated value and has the meaning dictated by the context (e.g., it includes the degree of error associated with measurement of the given parameter, as well as variations resulting from manufacturing tolerances, etc.).

As used herein, the term "and/or" includes any and all combinations of one or more of the associated listed items.

This disclosure relates to a mechanism for generating a recommended route for an agricultural vehicle in advance of performing an agricultural process. The mechanism further includes tracking adherence of the agricultural vehicle to the recommended route and/or controlling the vehicle to follow the recommended route. The recommended route is generated responsive to the classification(s) of one or more segments of a boundary of a predetermined region in which the agricultural process is to be performed.

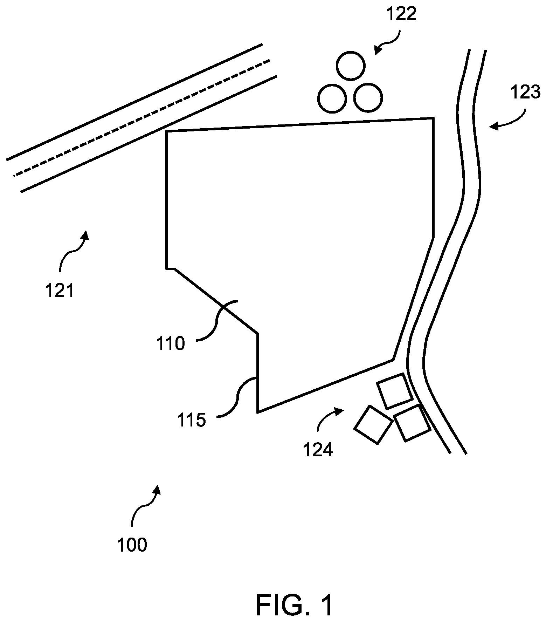

FIG. 1 illustrates a view of an agricultural environment 100 in which proposed embodiments may be implemented, for the purposes of improved contextual understanding. Within the environment 100, a predetermined region 110 is bound or delineated by a boundary 115. The predetermined region may, for instance, represent a field of a farm.

In any agricultural environment, there may be one or more hazards, objects or other areas of interest outside of the predetermined region. For instance, a road 121 may approach an edge of the predetermined region, there may be one or more clusters 122, 124 of trees or other objects (e.g., a first cluster 122 and a second cluster 124) and a waterway 123 may run alongside another section of the boundary. Of course, other hazards, objects or other areas of interest will be apparent to the skilled person, such as crops, hedges, ditches, fences, buildings or other structures and so on. The precise nature and type of hazard, object or other area of interest within the vicinity of the predetermined region will, naturally, depend upon the specific use-case scenario.

The present disclosure recognizes that it would be desirable if the route taken by an agricultural vehicle (when performing an agricultural process or procedure within the predetermined region) takes account of the environment in which it is positioned.

The present disclosure proposes to plan a recommended route for the agricultural vehicle using classifications of different segments of the boundary for the predetermined region in the planning of the recommended route.

By way of example only, the recommended route may be selected so as to permit a different proximity and/or action of the agricultural vehicle dependent upon the classification of the set of segments to which the recommended route approaches. More detailed examples are later provided.

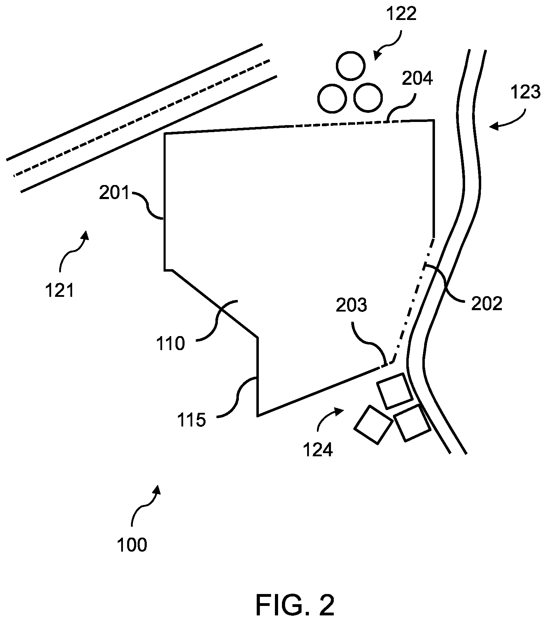

FIG. 2 provides a view of the environment 100 in which the boundary 115 has been sub-divided into a plurality of different segments. Different sets 201, 202, 203, 204 of segments are labelled, with each set of segments having a different classification. Each classification here indicates, if present, a type of objects and/or area (outside the predetermined region 110) that is proximate to the corresponding set of segment(s). Thus, each classification for each of plurality of segments of the boundary indicates a type of object or area proximate to the boundary and outside of the predetermined region.

By way of example only, a first set 201 of segments (indicated with a solid line) may indicate that there are no objects and/or areas (of interest). A second set 202 of segments may indicate that there is a waterway (e.g., river) in the vicinity of the segment(s). A third set 203 of segments may indicate that that is a cluster 124 of buildings in the vicinity of the segment(s). A fourth set 204 of segments may indicate that there is a cluster 122 of trees in the vicinity of the segment(s).

As previously explained, the proposed approach exploits information about the segments in order to generate a recommended route. The proposed approach also facilitates a mechanism for tracking the adherence of the agricultural vehicle to the recommended route and updating the recommended route responsive to any deviation(s).

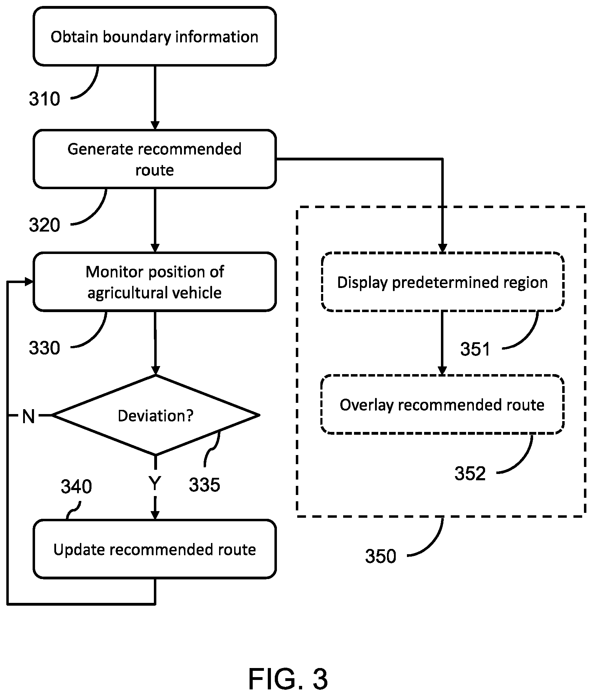

FIG. 3 is a flowchart illustrating a proposed computer-implemented method 300 that is executed, e.g., by a processing system, to perform the proposed approach. In particular, the method 300 is designed for generating a recommended route for an agricultural vehicle to perform an agricultural process within a predetermined region bound by a boundary.

The computer-implemented method 300 comprises an act 310 of obtaining, by a guidance control system, boundary information. The boundary information identifies a classification for each of the plurality of segments of the boundary. In some examples, each classification for each of plurality of segments of the boundary indicates a type of object or area proximate to the boundary and outside of the predetermined region.

The boundary information may, for instance, be retrieved from a memory or database. More particularly, wherein the act of obtaining the boundary information may comprises retrieving the boundary information from a database storing a plurality of instances of boundary information for different predetermined regions. In this approach, the boundary information corresponding to the predetermined region is selected.

Alternatively, as later exemplified, the boundary information may be generated by the guidance control system using data of the boundary and (e.g., image) data of any hazard or objects in the vicinity of the boundary.

The computer-implemented method 300 also comprises an act 320 of generating, by the guidance control system, a recommended route for movement of the agricultural vehicle within the predetermined region by processing at least the boundary information.

The recommended route may be defined with respect to a predetermined spatial co-ordinate system, such as a global or geographic co-ordinate system (e.g., longitude and latitude), a region/local co-ordinate system (e.g., a trilaterated/triangulated position) or a relative co-ordinate system, such as one defined with respect to the boundary of the predetermined region.

In general, act 320 may comprise generating a recommended route with a target or aim of performing an agricultural process across the largest possible area of the predetermined region. The boundary information may indicate or be processed to derive one or more constraints or boundary conditions on the generation of the recommended route. The recommended route may be generated to adhere to any such constraints.

For instance, as later explained in more detail, the boundary information may indicate a minimum distance that the agricultural vehicle is permitted to approach particular segments of the boundary of the predetermined region.

As another example, one or more segments indicated in the boundary information may be associated with a preferred orientation for a part of the recommended route near the segment Thus, act 320 may comprise mapping a classification for a segment with a corresponding predetermined orientation, e.g., defined in a look-up table or the like. The predetermined orientation(s) may be defined in advance, e.g., by a user or default setting. The route may then be generated to adhere to the corresponding predetermined orientations. For instance, in some instances there may be a desire to ensure that the route is generally perpendicular to a segment indicating a nearby road. This orientation may, for instance, facilitate easier unloading of harvested grains from combines or transport carts to trucks stationed on the road.

In some scenarios, acts 320 comprises generating a plurality of waylines using at least the boundary information. A wayline may indicate a straight portion of the recommended route. The position of each wayline may be selected or chosen with a target or aim of performing an agricultural process across the largest possible area of the predetermined region. The boundary information may indicate or be processed to derive one or more constraints or boundary conditions on the generation of the waylines. The wayline(s) may be generated to adhere to any such constraints. Herein described approaches for generating a recommended route can be readily adapted for the generation of waylines.

In such scenarios, the recommended route may then be generated by connecting the generated waylines together in such a way as to produce the route. The connections between waylines may be (similarly) constrained by the boundary information or information derived therefrom.

In other scenarios, act 320 comprises directly generating the recommended route, i.e., without the generation of any waylines.

The computer-implemented method also comprises performing further acts 330 and 340, which are only performed during a subsequent (to act 320) performance of the agricultural process.

Act 330 comprises monitoring, using a position monitoring device, the position of the agricultural vehicle with respect to the recommended route. Act 330 may be performed by the guidance control system communicating or otherwise interacting with the position monitoring device to monitor the position of the agricultural vehicle.

Approaches for monitoring or tracking the position of an agricultural vehicle are widely known in the art, and typically track a positioning element of the agricultural vehicle. For instance, the positioning element may comprise a satellite navigation system for tracking the position of the positioning element. As another example, the positioning element may comprise an antenna that outputs one or more signals that are triangulated/trilaterated using an (external) triangulation/trilateration system.

The monitored/tracked position of the agricultural vehicle may be defined in the same spatial co-ordinate system as the recommended route. Where appropriate or required, this may comprise perform a spatial transformation of the monitored/tracked position and/or the recommended route so that both sets of data lie in a same spatial co-ordinate system, i.e., share a same spatial co-ordinate system. Approaches for performing such a technique are well known in the art, particularly as the relationship between different spatial co-ordinate systems can be readily defined.

Put another way, the position monitoring device may be configured to define a position of the agricultural vehicle within a predefined co-ordinate system. The recommended route defines a recommended path for the agricultural vehicle within the predefined co-ordinate system.

Act 340 comprises, responsive to a deviation of the monitored position of the agricultural vehicle from the recommended route, updating, by the guidance control system, the recommended route.

Thus, act 340 may comprise a sub-act 341 of determining whether or not that there is a deviation from the monitored position of the agricultural vehicle from the recommended route. Sub-act 341 may be performed by the guidance control system and/or the position monitoring system.

One approach to performing act 341 is to determine a shortest distance (e.g., in the shared spatial co-ordinate system) between the monitored position and the recommended route. Responsive to the determined distance breaching/exceeding a predetermined threshold (e.g., representing a spatial distance of no less than 1 m), then act 341 may determine that there is a deviation from the recommended route. Responsive to the determined distance failing to breach/exceed a predetermined threshold (e.g., representing a spatial distance of no less than 1 m), then act 341 may determine that there is no deviation from the recommended route.

Responsive to a positive determination in sub-act 341 (i.e., when a deviation is detected), the method 300 moves to a sub-act 342 of updating the recommended route. Sub-act 342 may be performed, for instance, by effectively repeating the procedure performed in act 320 - but with a modified version of the boundary of the region of interest. In particular, the boundary may be moved such that the predetermined region no longer contains any part of the region that has undergone the agricultural procedure.

In some examples, the recommended route comprises one or more location markers each identifying a point of the recommended route with respect to the predetermined co-ordinate system. This provides a mechanism for coherently and reliably defining the recommended route using a relatively small amount of data.

Optionally, the method 300 further comprises an act 350 of controlling an output user interface to provide a visual representation of the recommended route. Approaches for controlling an output user interface (e.g., a display or screen) to provide a visual representation of a data element will be readily apparent to the skilled person.

As a working example, act 350 may comprise a sub-act 351 of controlling the output user interface to provide a visual representation of the predetermined region. This may be performed, for example, by using the boundary information to define the shape of the predetermined region. As an alternative example, this may be performed by using an aerial photograph (e.g., a satellite image) of the predetermined region.

In this working example, act 350 may further comprise a sub-act 352 of overlaying a visual representation of the recommended route, over the visual representation of the predetermined region. The visual representation of the recommended route may take the form of one or more lines representing the recommended route.

Sub-act 352 can be trivially performed if the spatial relationship between the predetermined region and the recommended route is known, e.g., they are defined in a same spatial co-ordinate system. In particular, the global position of an area represented in an aerial photograph, such as a satellite image, is known or determinable when the aerial photograph is taken. If the recommended route can be defined using similar geographic position information, then a visual representation of the recommended route can be trivially overlaid upon the visual representation of the predetermined region.

Although not illustrated in FIG. 3, the method 300 may comprise, during the agricultural procedure, controlling (using a vehicle control device) a movement of the agricultural vehicle to follow the recommended route. This may be performed by monitoring the position of the agricultural vehicle (e.g., using any previously described approach) and controlling the steering of the agricultural vehicle such that the monitored position follows the recommended route.

In this way, the method 300 may comprise an act of controlling the direction of the agricultural vehicle is performed automatically.

Approaches for automated control of an agricultural vehicle to follow a recommended route are known in the art, e.g., as suggested by (inter alia) Pedersen, Søren Marcus, et al. "Agricultural robots-system analysis and economic feasibility." Precision agriculture 7 (2006): 295-308 or O'Connor, Michael, et al. "Automatic steering of farm vehicles using GPS." Proceedings of the Third International Conference on Precision Agriculture. Madison, WI, USA: American Society of Agronomy, Crop Science Society of America, Soil Science Society of America, 1996.

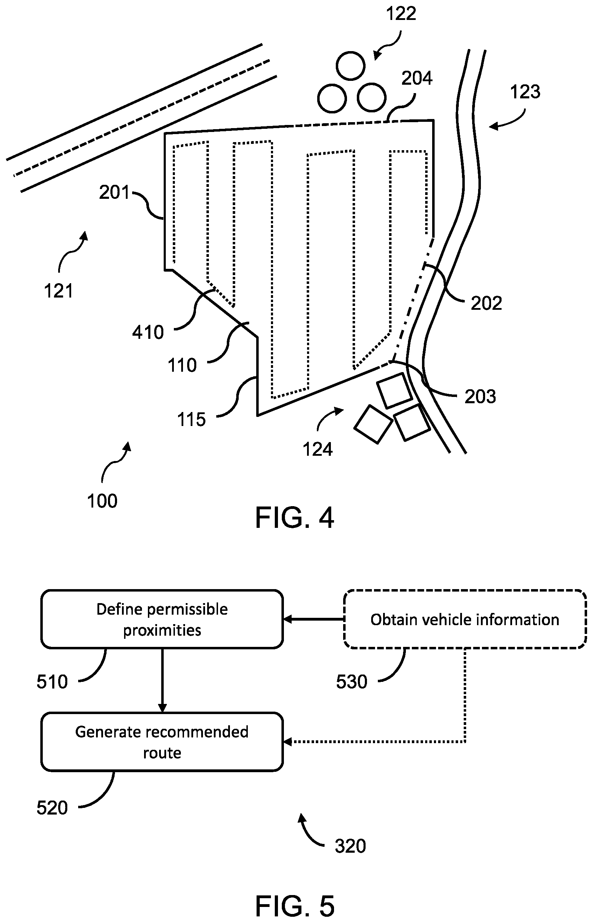

FIG. 4 provides a view of the environment 100 with a representation of the recommended route 410 positioned thereon.

FIG. 5 is a flowchart illustrating a number of proposed approaches for performing act 320 of generating a recommended route for the agricultural vehicle using the boundary information.

In one proposed approach, act 320 comprises a sub-act 510 of defining, for each of the plurality of segments of the boundary, a permissible proximity for the agricultural vehicle to said segment of the boundary responsive to the classification of said segment of the bound.

Thus, sub-act 510 effectively defines a permissible proximity to each segment of the boundary based on the classification of the segment of the boundary. Defining a permissible proximity may comprise, for instance, defining a minimum permissible distance that the agricultural vehicle is permitted to approach the boundary.

One approach for performing act 510 is to have a predetermined mapping between a classification for a segment and the permissible proximity. Thus, act 510 may comprise mapping a classification for a segment with a corresponding predetermined permissible distance, e.g., defined in a look-up table or the like. The predetermined permissible distance(s) are defined in advance, e.g., by a user or default setting.

It will be appreciated that act 320 also comprises an act 520 of generating the recommended route for movement of the agricultural vehicle. Where act 510 is performed, act 520 may comprise generating the recommended route by processing at least each defined permissible proximity such that, for each segment of the boundary, the recommended route avoids being more proximate to said segment of the boundary than the predefined permissible proximity for said segment.

In other words, in some proposed approaches, the recommended route is generated with a boundary condition that the recommended route is not permitted to be closer to any segment of the boundary (define in the boundary information) than the permissible proximity.

This approach recognizes that different types or classifications of segments would benefit from different minimum distances for an agricultural vehicle, e.g., to avoid or reduce a risk of damage to the agricultural vehicle and/or any elements outside at or outside of the bounds of the predetermined region.

By way of example, where a segment of a boundary has a classification that indicates that there is a waterway (e.g., river) in the vicinity of the segment, then it may be preferable to have a relatively large minimum distance for the agricultural vehicle, e.g., to reduce a risk of the agricultural vehicle moving over soft ground (and potentially getting stuck and/or damaged) and/or to reduce a risk of damaging the river (e.g., by spraying fertilizer into the river).

As another example, where a segment of a boundary has a classification that indicates that there is one or more trees in the vicinity of the segment, then it may be preferable to have a relatively large minimum distance for the agricultural vehicle, e.g., to avoid a risk of a branch or limb of the tree damaging the agricultural vehicle and/or to reduce a risk of ground compaction near the tree(s), which may damage the trees.

As yet another example, where a segment of the indicates that there are no objects of interest at or beyond the boundary, then then it may be preferable to have a relatively small minimum distance for the agricultural vehicle, e.g., to maximize or increase the size of the available area for undergoing the agricultural process when there are no hazards predicted to lie at the segment.

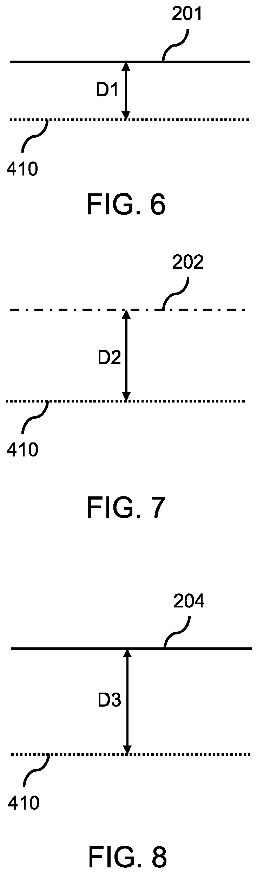

FIGS. 6, 7 and 8 conceptually illustrate different types of segments with different permissible proximities D1, D2, D3. These FIGS. Demonstrate how the minimum distance between the recommended route 410 and the segment(s) 201, 202, 204 can be modified responsive to the classification of the segment.

For instance, where the segment(s) 201 indicate that there are no hazards (FIG. 6), then the minimum distance D1 may be relatively small. Where the segment(s) 202 indicate that there is a waterway (FIG. 7), then the minimum distance D2 may be larger. Where the segment(s) 204 indicate that there is a cluster of one or more trees (FIG. 8), then the minimum distance may be larger still.

Turning back to FIG. 5, the act 320 may comprise an act 530 of obtaining, by the guidance control system, vehicle information. The vehicle information identifies one or more properties of the agricultural vehicle. For instance, the vehicle information may identify a category or classification of the agricultural vehicle (e.g., to indicate an agricultural process performed using the agricultural vehicle and/or one or more other properties of the agricultural vehicle). As another example, the vehicle information may identify a maximum width of the agricultural vehicle. As yet another example, the vehicle information may indicate a weight of the agricultural vehicle (e.g., in a categorical data format and/or numerical data format).

Where the vehicle information identifies a category or classification of the agricultural vehicle, then (when used in any herein described act) the category or classification may be processed to generate or determine one or more other properties of the agricultural vehicle. For instance, a look-table may be used to map a category/classification to one or more properties (e.g., a width, a weight, an agricultural process performed and so on). The identified property/properties may then be processed according to any herein described act.

In the context of the present disclosure, a width of an agricultural vehicle may indicate a largest physical width of the agricultural vehicle and/or any implement towed/pushed thereby, i.e., a largest width of the footprint of the agricultural vehicle. Alternatively, the width of the agricultural vehicle may indicate a largest width of a zone with which the agricultural vehicle interacts when performing the agricultural process, for instance a largest width of a spray zone for a sprayer or a largest width of a planting zone for a planter.

Act 530 may, for instance, be performed by receiving a user input identifying the vehicle information. Alternatively, act 530 may be performed by receiving information from a memory carried by the agricultural vehicle.

In some examples, where performed, the act 510 of defining of the permissible proximity for each segment of the boundary is further responsive to the vehicle information.

For instance, where the vehicle information indicates a width of the agricultural vehicle, then act 510 may comprise setting, for each segment, the permissible proximity to be no less than a buffer distance (defined by the classification of the segment) plus half of the width of the agricultural vehicle (defined by the vehicle information). This reduces a risk that the agricultural vehicle will impede upon the buffer distance defined by the classification of the segment when traversing the recommended route.

As another example, where the vehicle information indicates a weight of the agricultural vehicle, then act 510 may comprise setting, for any segment having one of a predetermined group of classifications, the permissible proximity to be greater for higher weights of the agricultural vehicle than for lower weights. This may, for instance, be useful if the classification of the segment represents an increased risk of damage to the vehicle or any object in the vicinity of the segment for increased weights (e.g., segments representing any nearby trees would benefit from a greater distance for heavier vehicles to reduce a risk of damaging tree roots, or segments representing a nearby waterway would benefit from a greater distance for heavier vehicles to reduce a risk of the vehicle sinking into soft ground). A wide variety of other example uses for the weight of a vehicle to determine a permissible proximity would be apparent to the skilled person.

As another example, where the vehicle information indicates a classification of the agricultural vehicle, then the permissible proximity may be different for different classifications of vehicles. For instance, a minimum distance may be greater for a combine harvester than for a tractor (e.g., due to a difference in expected size and/or weight).

In some examples, the act 520 of generating the recommended route further makes use of the vehicle information to generate the recommended route. In other words, route planning (performed in act 520) may use at least the boundary information and the vehicle information to generate the recommended route. Thus, the recommended route may be responsive to at least the boundary information and the vehicle information. More specifically, act 520 may comprise generating the recommended route using the boundary information and the vehicle information to define one or more constraints for the recommended route.

By way of example, where the vehicle information indicates a width of the agricultural vehicle, then act 520 may comprise generating the recommended route to reduce or minimize (e.g., as a cost of a cost function) any overlap between ground covered by the agricultural vehicle navigating the route. As another example, where the vehicle information indicates a weight of the agricultural vehicle, then act 520 may comprise generating the recommended route to reduce or minimize (e.g., as a cost defined by a cost function) a maximum concentration of weight in any area of the region of interest, e.g., to reduce a risk of ground compaction.

A wide variety of other example approaches and techniques for configuring the recommended route responsive to vehicle information will be readily apparent to the skilled person. In particular, once the skilled person appreciates the insight put forward in the present disclosure that vehicle information can be used to modify or constrain the generation of a recommended route for an agricultural vehicle within a predetermined region.

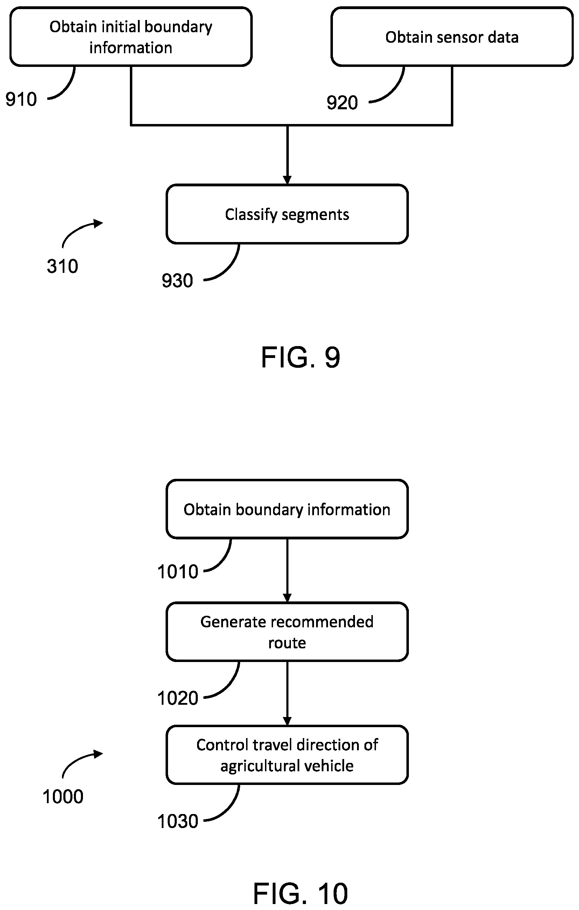

FIG. 9 illustrates an approach for performing act 310 of obtaining, by the guidance control system, boundary information.

In this approach, act 310 comprises a sub-act 910 of obtaining initial boundary information defining the boundary that bounds the region. The initial boundary information may therefore identify, within a particular spatial co-ordinate system, the position of the boundary that bounds the predetermined region.

In this approach, act 310 further comprises a sub-act 920 of obtaining sensor data containing a representation of one or more objects and/or areas outside of the boundary that bounds the region.

Act 310 here also further comprises a sub-act 930 of processing the initial boundary information and the sensor data to classify each of a plurality of segments of the boundary to thereby produce the boundary information.

In this way, the sensor data provides information or data that facilitates the identification of different classifications or categories of segments of the boundary. For instance, the sensor data may contain a (data) representation of one or more objects or area at or within the vicinity of the boundary. The representation(s) may be processed to discriminate between one or more different sets of one or more segments of the boundary.

As a working example, the sensor data may comprise LIDAR data produced by a LIDAR sensor. As another working example, the sensor data may comprise a depth image (e.g., a time-of-flight image). In yet another working example, the sensor data may comprise image data comprising a plurality of channels, including a channel representing depth and one or more other channels each representing a visual appearance of an imaged region (e.g., RGB channels or the like).

One example technique for performing sub-act 930 is illustrated in FIG. 9.

In particular, sub-act 930 may comprise a sub-act 931 of processing the sensor data to identify and classify one or more objects or areas represented within the sensor data. Sub-act 931 may be performed using one or machine-learning algorithms, e.g., one or more machine-learning algorithms that have been appropriately configured and/or trained to perform a function of object and/or area classification, e.g., one or more image segmentation algorithms or object detection algorithms.

Embodiments therefore make use of one or more machine-learning algorithms for performing object/area identification and classification (i.e., object detection) within sensor data. Any suitable machine-learning algorithm may be used in different embodiments for the present disclosure. Suitable machine-learning algorithms include (artificial) neural networks, support vector machines (SVMs), Naïve Bayesian models and decision tree algorithms, although other appropriate examples will be apparent to the skilled person.

There are a number of well-established approaches for training a machine-learning algorithm. One widely used learning approach is known as a supervised learning approach, which makes use of a large database of known input and output data. In such techniques, the machine-learning algorithm is modified until an error between predicted output data, obtained by processing the input data with the machine-learning algorithm, and the actual (known) output data is close to zero, i.e., until the predicted output data and the known output data converge. The value of this error is often defined by a cost function, which can be selected or defined by an appropriately skilled individual. The precise mechanism for modifying the machine-learning algorithm depends upon the type of model. Example approaches for use with a neural network include gradient descent, backpropagation algorithms and so on.

For use in the above-described approach, the known input data comprises sensor data. The corresponding known output data comprises, for each instance of sensor data, an identification of a representation of an object/area within the sensor data and an identification of a classification of said object/area.

The skilled person will appreciate how different forms of known input and output data can be used dependent upon the function or purpose of the machine-learning algorithm.

It is not essential that the machine learning algorithm(s) be trained by the guidance control system. Rather, the machine-learning algorithm(s) may be trained in advance of their usage (i.e., exploitation for performing inference) by the guidance control system. More specifically, the machine-learning algorithm(s) may be trained by a dedicated training processing system, such as a cloud-based processing system.

From the foregoing, it will be apparent that sub-act 931 effectively performs a procedure of identifying one or more representations of one or more objects/areas within the sensor data (if present).

In the illustrated technique, sub-act 930 further comprises a sub-act 932 of determining a relative position of each classified object or area with respect to the boundary defined by the initial boundary information. This can be readily achieved if there is a known relationship between the position of the representation of the classified object/area in the sensor data and a position of the boundary defined by the initial boundary information, e.g., if both lie in a same spatial co-ordinate system or there is a known mapping between a spatial co-ordinate system represented by the sensor data and the spatial co-ordinate system in which the boundary is defined.

As a working example, in some scenarios the sensor data is produced by a sensor device positioned within the region bound by a boundary. The sensor device may have a known position with respect to the boundary. Moreover, the sensor data may indicate a direction and distance between the sensor device and each classified object/area. This facilitates a trivial identification of the relative position between the classified object/area and the location of the boundary. More specifically, if the position of the sensor device is known in advance, then simple geometric techniques can be used to calculate or otherwise derive the relative position of the classified object/area with respect to the boundary, i.e., by setting the position of the classified object/area to lie at the indicated distance along the indicated direction from the known position of the sensor device.

Sub-act 930 may further comprise a sub-act 933 of classifying each of a plurality of segments of the boundary responsive to a proximity of each classified object or area to each segment of the boundary. In particular, the classification of the segment(s) may indicate a classification of the object(s)/area(s) within a predefined proximity. Thus, each classification for an object/area may be associated with a corresponding classification for a segment of the boundary.

In a simple example, for each classified object, any part of the boundary within a predetermined distance of the classified object may be defined as being a segment having a classification that identifies that it is near the classified object/segment. Thus, each classification of a segment may simply indicate which classified object/area is in the vicinity of the segment. Any part of the boundary that is not within the predetermined distance of any classified object/area may be defined as a segment having a classification that indicates that there are no objects/areas (of interest) within the vicinity of the segment.

The predetermined distance may, in some embodiments, be different for different classified objects/areas. This advantageously acknowledges that the impact of different classifications of objects/areas may impact the agricultural process to different extends. For instance, if an object has a classification of "bush", then the distance that such an object will be able to affect an ability to perform an agricultural process will be less than an object having a classification of "tree" (e.g., due to a greater footprint of the tree).

However, in alternative embodiments, the predetermined distance may be the same for all classified object/areas.

If any part of the boundary is within a predetermined distance of more than one classified object of different classifications, then one or more rules may be used to determine or assign a classification to said part of the boundary. For instance, in some examples, the part of the boundary may be defined as being one of a set of segments having a classification associated with the closest classified object/area. As another example, a same part of the boundary may belong to more than one set of one or more segments. In such a scenario, the boundary information will indicate, for at least one segment of the boundary, two or more classifications of each segment. As yet another example, there may be an ordered list of classifications (of the object(s) and/or area(s) and/or segments) indicating an order of priority, and the highest priority classification may be selected.

FIG. 10 is a flowchart illustrating another herein proposed (computer-implemented) method 1000. The method 1000 is designed or configured for moving an agricultural vehicle within a predetermined region bound by a boundary.

The method 1000 comprises an act 1010 of obtaining, by a guidance control system, boundary information, wherein the boundary information identifies a classification for each of plurality of segments of the boundary. Approaches for performing the function of act 1010 have been previously described, e.g., in the context of performing act 310 first illustrated in FIG. 3 and described in the corresponding portion(s) of the description.

The method 1000 also comprises an act 1020 of generating, by the guidance control system, a recommended route for movement of the agricultural vehicle within the predetermined region by processing at least the boundary information. Suitable approaches for performing the function of act 1020 have been previously described, e.g., in the context of performing act 320 first illustrated in FIG. 3 and described in the corresponding portion(s) of the description.

The method 1000 also comprises, during a subsequent performance of the agricultural process by the agricultural vehicle within the region, an act 1030 of controlling the travel direction of the agricultural vehicle, during performance of an agricultural process, to follow the recommended route for the agricultural vehicle. In some embodiments, act 1030 can also include controlling the travel speed of the agricultural vehicle, during performance of the agricultural process.

The performance of act 1030 may be performed and/or coordinated by the guidance control system, such that the control of the travel direction of the agricultural vehicle is performed automatically. Approaches for automated control of an agricultural vehicle to follow a recommended route are known in the art, e.g., as suggested by (inter alia) Pedersen, Søren Marcus, et al. "Agricultural robots-system analysis and economic feasibility." Precision agriculture 7 (2006): 295-308 or O'Connor, Michael, et al. "Automatic steering of farm vehicles using GPS." Proceedings of the Third International Conference on Precision Agriculture. Madison, WI, USA: American Society of Agronomy, Crop Science Society of America, Soil Science Society of America, 1996. In some embodiments, the travel speed of the agricultural vehicle can also be automatically controlled. For instance, the travel speed of the agricultural vehicle can be automatically controlled to slow down when approaching a detected dangerous area (e.g., as described above, if the classification of a segment represents an increased risk of damage to the vehicle or any object in the vicinity of the segment).

Alternatively, the performance of act 1030 may be performed or controlled by a human operator of the agricultural vehicle, e.g., performing a manual control of the travel direction(s) of the agricultural vehicle using any known vehicle control mechanism (e.g., a steering wheel or the like). In such approaches, act 1030 may comprise controlling an output user interface to provide a visual representation of the recommended route (example approaches for which have been previously described) and controlling, by the human operator, the travel direction of the agricultural vehicle responsive to the recommended route.

It will be appreciated that the method 300 (FIG. 3) and the method 1000 (FIG. 10) may be performed in parallel. In such approaches, acts of the two methods that are identical to one another may be performed in a single act or procedure.

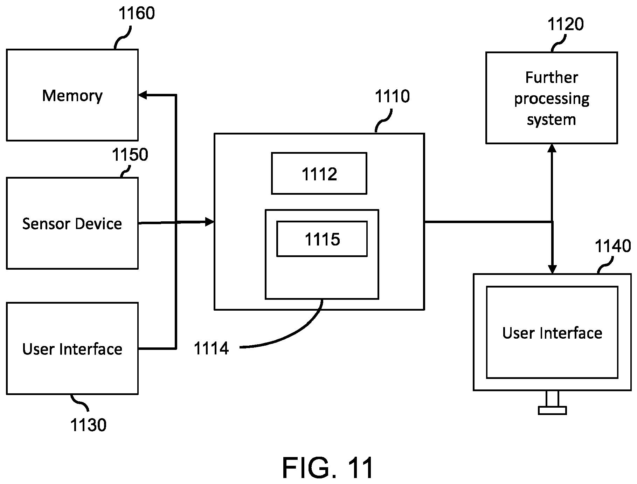

FIG. 11 illustrates an example of system 1100 in which embodiments may be employed.

The guidance control system comprises a guidance control system 1110, which is itself an embodiment of the disclosure, a position monitoring device 1120, a (optional) input user interface 1130, and a (optional) output user interface 1140.

The guidance control system 1110 is configured to perform and/or co-ordinate the performance of any previously disclosed act that is identified as being performed by or using the guidance control system.

In particular examples, the guidance control system 1110 may perform the acts of: obtaining, by a guidance control system, boundary information, wherein the boundary information identifies a classification for each of plurality of segments of the boundary; generating, by the guidance control system, a recommended route for movement of the agricultural vehicle within the predetermined region by processing at least the boundary information; and during a subsequent performance of the agricultural process by the agricultural vehicle within the region: monitoring, using a position monitoring device, the position of the agricultural vehicle with respect to the recommended route; and responsive to a deviation of the monitored position of the agricultural vehicle from the recommended route, updating, by the guidance control system, the recommended route.

In some examples, the guidance control system 1110 may perform acts of: obtaining boundary information of a predetermined region, wherein the boundary information identifies a classification for each of a plurality of segments of the boundary; generating a recommended route for movement of the agricultural vehicle within the predetermined region by processing at least the boundary information; and during a subsequent performance of the agricultural process by the agricultural vehicle within the region, controlling the travel direction of the agricultural vehicle to follow the recommended route for the agricultural vehicle.

More specifically, the guidance control system 1110 may comprise at least one processor 1112 and at least one non-transitory computer-readable storage medium 1114 storing instructions 1115 thereon that, when executed by the at least one processor, cause the guidance control system to perform any previously disclosed act that is identified as being performed by or using the guidance control system.

The skilled person would be readily capable of developing a guidance control system for carrying out any herein described method. Thus, each act of the flow chart may represent a different action performed by a guidance control system and may be performed by a respective module of the guidance control system.

The position monitoring device 1120 is configured to monitor the position of an agricultural vehicle during the performance of an agricultural process. Approaches for monitoring the position of a vehicle are well known in the art, some of which have been previously described in detail. The function or operation of the position monitoring system may be controlled by and/or responsive to instructions/communications from the guidance control system.

The guidance control system 1110 and the position monitoring device 1120 are configured to communicate with one another over any wired/wireless medium, e.g., an ethernet cable, using any suitable or known communication protocol.

The input user interface 1130 may be adapted to receive one or more inputs from a user or operator. The input(s) may, for instance, be used to define one or more properties or parameters used in one or more of the herein disclosed methods.

The output user interface 1140 may be adapted to provide a visual representation of the predetermined region and/or the recommended route. In particular, the guidance control system 1110 may communicate with the output user interface (e.g., embodiable as a screen or display) to provide such a visual representation.

The system 1100 may further comprise a sensor device 1150 configured to generate the sensor data. The sensor device may, for instance, be configured to only obtain the sensor data when positioned within the region bound by a boundary, the sensor device having a known position with respect to the boundary.

The system 1100 may further comprise a memory 1160 configured to store one or more instances of boundary information. The guidance control system may be configured to obtain one of the one or more instances of boundary information from the memory 1160. More particularly, the memory or database may store a plurality of instances of boundary information for different predetermined regions. In this approach, the boundary information corresponding to the predetermined region is selected from the database, i.e., by selecting the boundary information corresponding to the relevant predetermined region.

There is also provided an agricultural vehicle comprising any herein disclosed guidance control system 1110 and (where appropriate) the position monitoring system.

It will be understood that disclosed methods are preferably computer-implemented methods. As such, there is also proposed the concept of a computer program comprising code means for implementing any described method when said program is run on a guidance control system, such as a computer. Thus, different portions, lines or blocks of code of a computer program according to an embodiment may be executed by a guidance control system or computer to perform any herein described method.

A computer program may be stored on a computer-readable medium, itself an embodiment of the disclosure. A "computer-readable medium" is any suitable mechanism or format that can store a program for later processing by a guidance control system. The computer readable medium can be, for example but not limited to, an electronic, magnetic, optical, electromagnetic, infrared, or semiconductor system, apparatus or device. The computer-readable medium is preferably non-transitory.

In some alternative implementations, the functions noted in the block diagram(s) or flow chart(s) may occur out of the order noted in the figures. For example, two blocks shown in succession may, in fact, be executed substantially concurrently, or the blocks may sometimes be executed in the reverse order, depending upon the functionality involved.

Variations to the disclosed embodiments can be understood and effected by those skilled in the art in practicing embodiments of the disclosure, from a study of the drawings, the disclosure and the appended claims. In the claims, the word "comprising" does not exclude other elements or acts, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa. Any reference signs in the claims should not be construed as limiting the scope.

All references cited herein are incorporated herein in their entireties. If there is a conflict between definitions herein and in an incorporated reference, the definition herein shall control.

## Claims

1. A computer-implemented method for generating a recommended route for an agricultural vehicle to perform an agricultural process within a predetermined region bound by a boundary, the computer-implemented method comprising:
obtaining, by a guidance control system, boundary information, wherein the boundary information identifies a classification for each of plurality of segments of the boundary;
generating, by the guidance control system, a recommended route for movement of the agricultural vehicle within the predetermined region by processing at least the boundary information; and
during a subsequent performance of the agricultural process by the agricultural vehicle within the region:
monitoring, using a position monitoring device, the position of the agricultural vehicle with respect to the recommended route; and
responsive to a deviation of the monitored position of the agricultural vehicle from the recommended route, updating, by the guidance control system, the recommended route.

2. The computer-implemented method of claim 1, wherein generating, by the guidance control system, the recommended route comprises:
defining, for each of the plurality of segments of the boundary, a permissible proximity for the agricultural vehicle to said segment of the boundary responsive to the classification of said segment of the boundary; and
generating the recommended route for movement of the agricultural vehicle by processing at least each defined permissible proximity such that, for each segment of the boundary, the recommended route avoids being more proximate to said segment of the boundary than the predefined permissible proximity for said segment.

3. The computer-implemented method of claim 2, further comprising obtaining, by the guidance control system, vehicle information, wherein:
the vehicle information identifies a category of the agricultural vehicle; and
the defining of the permissible proximity for each segment of the boundary is further responsive to the vehicle information.

4. The computer-implemented method of any one of claims 1 to 3, wherein obtaining, by the guidance control system, boundary information comprises:
obtaining initial boundary information defining the boundary that bounds the region;
obtaining sensor data containing a representation of one or more objects and/or areas outside of the boundary that bounds the region; and
processing the initial boundary information and the sensor data to classify each of a plurality of segments of the boundary to thereby produce the boundary information.

5. The computer-implemented method of claim 4, wherein processing the initial boundary information and the sensor data comprises:
processing the sensor data to:
identify and classify one or more objects or areas represented within the sensor data; and
determine a relative position of each classified object or area with respect to the boundary defined by the initial boundary information; and
classifying each of a plurality of segments of the boundary responsive to a proximity of each classified object or area to each segment of the boundary.

6. The computer-implemented method of claim 5, wherein:
the sensor data is produced by a sensor device positioned within the region bound by a boundary, the sensor device having a known position with respect to the boundary; and
the sensor data indicates a direction and distance between the sensor device and each classified object.

7. The computer-implemented method of any one of claims 4 to 6, wherein the act of processing the sensor data to identify and classify one or more objects or areas comprises processing the sensor data using one or machine-learning algorithms.

8. The computer-implemented method of any one of claims 1 to 7, further comprising controlling an output user interface to provide a visual representation of the recommended route; optionally wherein controlling the output user interface comprises:
providing a visual representation of the predetermined region; and
overlaying a visual representation of the recommended route, over the visual representation of the predetermined region, in the form of one or more lines representing the recommended route.

9. The computer-implemented method of any one of claims 1 to 8, wherein:
the position monitoring device is configured to define a position of the agricultural vehicle within a predefined co-ordinate system; and
the recommended route defines a recommended path for the agricultural vehicle within the predefined co-ordinate system.

10. The computer-implemented method of claim 9, wherein the recommended route comprises one or more location markers each identifying a point of the recommended route with respect to the predetermined co-ordinate system.

11. The computer-implemented method of any one of claims 1 to 10, wherein the act of obtaining the boundary information comprises retrieving the boundary information from a database storing a plurality of instances of boundary information for different predetermined regions.

12. The computer-implemented method of any one of claims 1 to 11, wherein each classification for each of plurality of segments of the boundary indicates a type of object or area proximate to the boundary and outside of the predetermined region.

13. A method for moving an agricultural vehicle within a predetermined region bound by a boundary, the method comprising:
generating a recommended route for the agricultural vehicle by:
obtaining, by a guidance control system, boundary information, wherein the boundary information identifies a classification for each of plurality of segments of the boundary; and
generating, by the guidance control system, a recommended route for movement of the agricultural vehicle within the predetermined region by processing at least the boundary information;
during a subsequent performance of the agricultural process by the agricultural vehicle within the region, controlling the travel direction of the agricultural vehicle to follow the recommended route for the agricultural vehicle.

14. An agricultural vehicle, comprising:
a guidance control system configured to control one or more operations of the agricultural vehicle and comprising:
at least one processor; and
at least one non-transitory computer-readable storage medium storing instructions thereon that, when executed by the at least one processor, cause the guidance control system to:
obtain boundary information of a predetermined region, wherein the boundary information identifies a classification for each of a plurality of segments of the boundary;
generate a recommended route for movement of the agricultural vehicle within the predetermined region by processing at least the boundary information; and
during a subsequent performance of the agricultural process by the agricultural vehicle within the predetermined region:
monitor, using a position monitoring device, the position of the agricultural vehicle with respect to the recommended route; and
responsive to a deviation of the monitored position of the agricultural vehicle from the recommended route, updating, by the guidance control system, the recommended route.

15. The agricultural vehicle of claim 14, further comprising:
an output user interface and
wherein at least one non-transitory computer-readable storage medium of the guidance control system further comprises instructions that, when executed by the at least one processor, cause the guidance control system guidance control system to provide, on the output user interface, a visual representation of the recommended route.
